# EUROPEAN PATENT SPECIFICATION

(11) **EP 2 235 771 B1**
(45) Date of publication and mention of the grant of the patent: **26.11.2014**
(21) Application number: 08867095.5
(22) Date of filing: 23.12.2008
(51) Int. Cl.: H01M 4/86, H01M 8/10, H01M 4/88

(54) **ELECTRODE FOR FUEL CELL HAVING TWO KINDS OF HYDROPHILICITY AND METHOD FOR PREPARING THE SAME AND MEMBRANE ELECTRODE ASSEMBLY AND FUEL CELL COMPRISING THE SAME**
ELEKTRODE FÜR EINE BRENNSTOFFZELLE MIT ZWEI ARTEN VON HYDROPHILIZITÄT UND HERSTELLUNGSVERFAHREN DAFÜR UND MEMBRANELEKTRODENBAUGRUPPE UND BRENNSTOFFZELLE DAMIT
ÉLECTRODE POUR PILE À COMBUSTIBLE PRÉSENTANT DEUX TYPES D'HYDROPHILICITÉ ET SON PROCÉDÉ DE PRÉPARATION, ET ENSEMBLE ÉLECTRODE MEMBRANE ET PILE À COMBUSTIBLE COMPRENANT LADITE ÉLECTRODE

(30) Priority: 28.12.2007 KR 20070140568
(43) Date of publication of application: 06.10.2010
(73) Proprietor: LG Chem, Ltd., Youngdungpo-gu Seoul 150-721 (KR)
(72) Inventor: KIM, Hyuk, Yuseong-gu, Daejeon, 305-380 (KR); JEONG,Seong-Uk, Seoul 132-030 (KR); LEE, Chang-Song, Daejeon 305-743 (KR); LEE, Won-Ho, Daejeon 302-741 (KR)
(74) Representative: Goddar, Heinz J.
(86) International application number: PCT/KR2008/007615
(87) International publication number: WO 2009/084846

(56) References cited:
- EP-A1- 2 131 425
- JP-A- 2006 286 330
- JP-A- 2007 123 235
- US-A1- 2006 194 095
- US-A1- 2006 292 434
- US-A1- 2006 292 434
- US-A1- 2007 003 815
- US-A1- 2007 003 815

## Description

### Technical Field

The present invention relates to an electrode for a fuel cell having two kinds of hydrophilicities, a method for preparing the same, and a membrane electrode assembly and a fuel cell having the same, and more particularly to an electrode for a fuel cell capable of efficiently controlling moisture in a catalyst layer, a method for preparing the same, and a membrane electrode assembly and a fuel cell having the same.

### Background Art

Recently, as depletion of conventional energy resources such as oil or coal is foreseen, interest in an alternative energy is increasing. A fuel cell is one of the alternative energy, and advantageously has a high efficiency, does not emit pollutants of NOₓ and SOₓ and uses a fuel that is abundant in quantity, and therefore, the fuel cell attracts public attention.

The fuel cell is a power generation system that converts chemical energy of a fuel and an oxidant to electrical energy, and typically hydrogen and hydrocarbon, for example methanol or butane is used as a fuel, and oxygen is used as an oxidant.

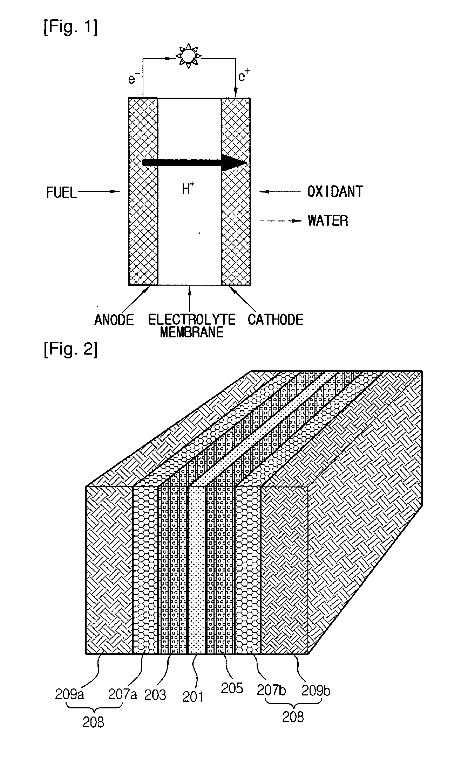

In the fuel cell, a membrane electrode assembly (MEA) is the basic unit for generating electricity, and includes an electrolyte membrane and anode and cathode electrodes formed at opposite sides of the electrolyte membrane. FIG. 1 illustrates the principle for generating electricity of a fuel cell, and Chemical Figure 1 represents a reaction formula of a fuel cell in the case that hydrogen is used as a fuel. Referring to FIG. 1 and Chemistry Figure 1, an oxidation reaction of a fuel occurs at an anode electrode to generate hydrogen ions and electrons, and the hydrogen ions move to a cathode electrode through an electrolyte membrane. The hydrogen ions transmitted through the electrolyte membrane and the electrons react with oxygen (oxidant) at the cathode electrode to generate water. This reaction causes the electrons to move to an external circuit.

### Chemistry Figure 1

Anode electrode: H₂ → 2H⁺+ 2e⁻

cathode electrode: 1/2O₂ + 2H⁺+ 2e⁻ → H₂O

Reaction formula: H₂ + 1/2O₂ → H₂O

FIG. 2 illustrates a general configuration of a membrane electrode assembly for a fuel cell. Referring to FIG. 2, a membrane electrode assembly for a fuel cell includes an electrolyte membrane 201, and an anode electrode and a cathode electrode located at the opposite sides of the electrolyte membrane 201. The anode and cathode electrodes respectively include catalyst layers 203, 205 and a gas diffusion layer 208. The gas diffusion layer includes electrode substrates 209a, 209b and microporous layers 207a, 207b formed on the electrode substrates.

In the fuel cell, the amount of moisture is a factor dominating the performance of the cell. Moisture introduced into a cell or generated in an electrode should be suitably maintained.

In detail, the moisture that is also a resultant material of reaction in an electrode assists ion transfer. However, an amount of moisture generated as a resultant material of reaction is not so sufficient to ensure ion conductivity of a fuel cell, so a fuel cell is generally operated under a humidified condition.

However, an excessive amount of moisture may black the micro pores in the catalyst layer or the gas diffusion layer. Thus, the fuel cell is preferably operated under a low humidity state such that only a required amount of moisture exists in the catalyst layer.

Meanwhile, in case the fuel cell is operated in an excessively low humidity condition, ion conductivity may be deteriorated due to the shortage of moisture, which resultantly decreases the efficiency of the fuel cell. Thus, it is a very critical issue to operate a fuel cell in a suitably low humidity level.

In the past, a catalyst layer of a membrane electrode assembly of a fuel cell was obtained by coating a substrate with one kind of ink having a catalyst and an ionomer, so the catalyst layer was entirely homogeneous. Thus, it was difficult to control moisture in the catalyst layer.

In this regards, Japanese Laid-open Patent Publication No. 2006-286330 discloses a method for making an electrode with different hydrophilicities in a catalyst layer by surface-reforming catalyst particles with compounds having different hydrophilicities.

However, it is urgently needed to develop a more efficient technique capable of suitably keeping moisture in a catalyst layer of an electrode of a fuel cell even in a low humidity operating condition.

### Disclosure of Invention

### Technical Problem

Therefore, an object of the present invention is to provide an electrode for a fuel cell, which may keep moisture in an electrode to a suitable level by controlling hydrophilicity in each area of a catalyst layer.

### Technical Solution

In order to accomplish the above object, the present invention provides an electrode for a fuel cell, which includes a gas diffusion layer contacting with a separator having a channel and a catalyst layer interposed between the gas diffusion layer and an electrolyte membrane, wherein the catalyst layer of the electrode has two portions with different hydrophilicities, and a portion of the catalyst layer that faces a channel has a higher hydrophilicity than a portion that does not face a channel.

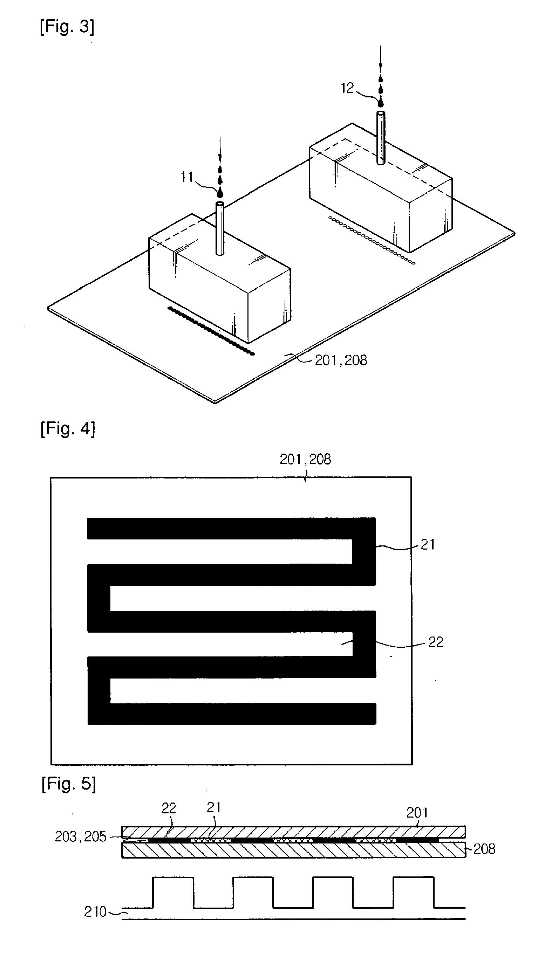

Inventors found that Japanese Laid-open Patent Publication No. 2006-286330 discloses that a catalyst layer has regions with different hydrophile properties, but its effect is insufficient since correlation between channel location and moisture control in the catalyst layer is overlooked. In this reason, as shown in FIG. 5, in the electrode for a fuel cell of the present invention, a hydrophilicity is enhanced in a portion 21 of a separator 210, which faces a channel, namely in a portion of catalyst layers 203, 205 corresponding to a gas diffusion layer 208 directly contacting with a gas having low humidity, thereby decreasing an amount of moisture taken away by the gas and allowing humidity to be kept sufficiently though moisture is taken away to some degree. Thus, moisture in the cell is suitably maintained, and so the performance of the cell may be improved. In the electrode of the present invention, the difference of hydrophilicities between the portion facing a channel and the portion not facing a channel may be considered as appropriate when a difference of contact angles to water is 2° to 20°, but the present invention is not limited thereto.

The electrode for a fuel cell according to the present invention may be more useful for a fuel cell operated in a low humidity condition, and for example the electrode may suitably keep moisture required for operating a fuel cell in a low humidity condition with a humidity of 0 to 70%, preferably 20 to 70%, more preferably 30 to 60%.

In the electrode of the present invention, the portion of the catalyst layer, which faces a channel, preferably further includes a hydrophilicity enhancer to enhance hydrophilicity in addition to an existing catalyst layer. For example, the portion of the catalyst layer, which faces a channel, may include a metal catalyst or a metal catalyst on a carbon-based support; a polymer ionomer; and a hydrophilicity enhancer selected from the group consisting of zeolite, ceria, acid-treated ceramic particle and Al₂O₃, or their mixtures. The content of the hydrophilicity enhancer may be set such that a weight ratio of the metal catalyst to the hydrophilicity enhancer is 1:0.05 to 1.

In the electrode of the present invention, the portion of the catalyst layer, which does not face a channel, may be a general catalyst layer commonly used in the art, and it may include a metal catalyst or a metal catalyst on a carbon-based support, and a polymer ionomer.

In another aspect of the present invention, there is also provided a method of preparing an electrode for a fuel cell, which includes (S1) preparing (a) a first catalyst layer forming ink including a metal catalyst or a metal catalyst on a carbon-based support, a polymer ionomer and a solvent, and (b) a second catalyst layer forming ink including a metal catalyst or a metal catalyst on a carbon-based support, a polymer ionomer, a hydrophilicity enhancer and a solvent, respectively; and (S2) spraying the first and second catalyst layer forming inks to an electrolyte membrane or a gas diffusion layer by means of ink jet spraying such that the first catalyst layer forming ink is sprayed to a portion that does not face a channel and the second catalyst layer forming ink is sprayed to a portion that faces a channel, thereby forming a catalyst layer.

In this regards, Japanese Laid-open Patent Publication No. 2006-286330 discloses a method for controlling hydrophile properties in a catalyst layer by surface-reforming catalyst particles, but the inventors found that this conventional technique needs an additional process for surface-reforming catalyst particles. However, in the method of the present invention, the hydrophilicity enhancer capable of improving hydrophilicity of a catalyst layer is added and mixed while the catalyst layer forming ink is prepared, so this method is very simple and does not need any separate process.

The above electrode of the present invention may be used for a membrane electrode assembly or a fuel cell.

### Brief Description of the Drawings

FIG. 1 is a schematic view illustrating the principle for generating electricity of a fuel cell.
FIG. 2 is a schematic view illustrating a general configuration of a membrane electrode assembly for a fuel cell.
FIG. 3 is a schematic view illustrating that a first catalyst layer forming ink and a second catalyst layer forming ink are respectively sprayed according to the present invention.
FIG. 4 is a plane view illustrating schematically that a catalyst layer is formed according to the present invention.
FIG. 5 is a cross-sectional view illustrating schematically that an electrode according to the present invention is formed.
FIG. 6 is a schematic view illustrating a fuel cell according to an embodiment of the present invention.

### Best Mode for Carrying Out the Invention

Hereinafter, an electrode for a fuel cell of the present invention will be described in detail according to its preparing method. Prior to the description, it should be understood that the terms used in the specification and the appended claims should not be construed as limited to general and dictionary meanings, but interpreted based on the meanings and concepts corresponding to technical aspects of the present invention on the basis of the principle that the inventor is allowed to define terms appropriately for the best explanation.

First, (a) a first catalyst layer forming ink including a metal catalyst or a metal catalyst on a carbon-based support, a polymer ionomer and a solvent and (b) a second catalyst layer forming ink including a metal catalyst or a metal catalyst on a carbon-based support, a polymer ionomer, a hydrophilicity enhancer and a solvent are prepared respectively (S1).

The first catalyst layer forming ink according to the present invention may employ any catalyst layer forming ink used in the art without limitation., For example, the catalyst layer forming ink may include a metal catalyst or a metal catalyst on a carbon-based support; a polymer ionomer; and a solvent.

The metal catalyst may be representatively any one selected from the group consisting of platinum, ruthenium, osmium, platinum-ruthenium alloy, platinum-osmium alloy, platinum-palladium alloy, platinum-molybdenum alloy, platinum-rhodium alloy and platinum-transition metal alloy, or their mixtures, however the present invention is not limited thereto.

The carbon-based support may be a carbon-based material, preferably any one selected from the group consisting of graphite, carbon black, acetylene black, denka black, ketjen black, activated carbon, mesoporous carbon, carbon nanotube, carbon nano fiber, carbon nano horn, carbon nano ring, carbon nano wire, fullerene (C60) and Super-P, or their mixtures.

The polymer ionomer may be representatively a nafion ionomer or a sulfonated polymer such as sulfonated polytrifluorostyrene.

The content of the polymer ionomer in the first catalyst layer forming ink may be suitably controlled according to kind and usage of a fuel cell, and the content may be preferably 15 to 45 parts by weight, based on 100 parts by weight of catalyst, explained later. Within this range, the ionomer does not excessively cover the catalyst layer to ensure easy reaction between catalyst and fuel, and also an ion transfer passage is satisfactorily formed in the catalyst layer to ensure good transfer of ions.

The solvent may be any one selected from the group consisting of water, butanol, isopropanol, methanol, ethanol, n-propanol, n-butyl acetate and ethylene glycol, or their mixtures.

In the first catalyst layer forming ink, the content of the solvent may be suitably controlled according to kind of the fuel cell or its production or usage circumstances. For example, the content of the solvent may be 100 to 5000 parts by weight, based on 100 parts by weight of catalyst, but not limitedly. In case the content of the solvent is within the above range, viscosity of the catalyst layer forming ink is most suitably maintained, thereby ensuring excellent dispersion of catalyst particles during the coating work to allow formation of a uniform catalyst layer. In addition, the coating work may be completed with a smallest work time, thereby ensuring excellent productility.

The second catalyst layer forming ink according to the present invention may be prepared in the same way as the first catalyst layer forming ink, except that a hydrophilicity enhancer is added. For example, the second catalyst layer forming ink includes a metal catalyst or a metal catalyst on a carbon-based support; a polymer ionomer; a hydrophilicity enhancer; and a solvent. The hydrophilicity enhancer may be any one selected from the group consisting of TiO₂, SiO₂, zeolite, zirconia, ceria, acid-treated ceramic particle or carbon, hydrophilic polymer and Al₂O₃, or their mixtures, but not limitedly.

The content of the hydrophilicity enhancer added to the second catalyst layer forming ink is controlled as necessary through sufficient experiments according to kind and usage of the fuel cell. The weight ratio of the metal catalyst and the hydrophilicity enhancer is set to 1:0.05 to 1. Within this range, the catalyst layer of the electrode exhibits excellent ion conductivity without disturbing mass transfer. In detail, the hydrophilicity enhancer gives different hydrophilicities according to used material. If the weight ratio is below the above range, the hydrophilic effect is not sufficient. However, if the weight ratio exceeds the above range, the excessive amount of hydrophilicity enhancer in comparison to catalyst draws too much water, which gives bad influence on mass transfer and disturbs transfer of electrons, thereby deteriorating the efficiency of an electrode.

After the ink is prepared as mentioned above, the first and second catalyst layer forming inks are sprayed onto an electrolyte membrane or a gas diffusion layer by means of ink jet spraying. At this time, the first catalyst layer forming ink is sprayed to a portion not facing a channel, and the second catalyst layer forming ink is sprayed to a portion facing the channel, thereby forming a catalyst layer (S2).

As shown in FIG. 3, a first catalyst layer forming ink 11 and a second catalyst layer forming ink 12 are sprayed onto an electrolyte membrane 201 or a gas diffusion layer 208. Ink jet spraying may use the related software to adjust a spray location of inkdrops very precisely, and thus individual inkdrops of the first catalyst layer forming ink 11 and the second catalyst layer forming ink 12 may be sprayed onto preset locations of the electrolyte membrane 201 or the gas diffusion layer 208. Thus, as shown in FIG. 4, it is possible to spray the second catalyst layer forming ink to a portion 21 facing a channel and to spray the first catalyst layer forming ink to a portion 22 not facing the channel.

In this way, though a fuel cell has various channel patterns, the first and second catalyst layer forming inks of the present invention may be respectively sprayed to a portion facing a channel and a portion not facing a channel according to position adjustment, so any regions with different hydrophilicities in the catalyst layer may be controlled.

As shown in FIG. 5, in the portion 21 of the catalyst layer facing the channel and portions of the electrolyte membrane and the gas diffusion layer facing the channel, gas flows with a relatively low humidity, so moisture is taken away. Thus, the catalyst layers 203, 205 corresponding to those portions have lower moisture concentration than other portions. Thus, the catalyst layers 203, 205 of the present invention are configured such that the portion 21 facing the channel has higher hydrophilicity than the portion 22 not facing the channel, thereby allowing that not much moisture is taken away from the gas. In addition, though moisture is taken away from the gas, moisture may be supplemented more easily due to the high hydrophilicity, so the moisture of the entire catalyst layers may be balanced.

The difference of hydrophilicities between the portion facing the channel and the portion not facing the channel may be measured in various ways. For example, this difference may be expressed using a contact angle to water. In the present invention, the difference of hydrophilicities between the portion facing the channel and the portion not facing the channel may be considered as appropriate when a difference of contact angles to water is 2° or above, preferably 5° or above, more preferably 10° or above, but the present invention is not limited thereto. If the difference of hydrophilicities is too great, reactivity in the catalyst layer may be deteriorated. Thus, the difference of hydrophilicities in the catalyst layer is considered as appropriate when the difference of contact angles to water is 2° to 20°.

When the first and second catalyst layer forming inkdrops are sprayed to preset locations on the electrolyte membrane or the gas diffusion layer to be adjacent to each other according to the above method, a catalyst layer is formed. When the first and second catalyst layer forming inkdrops are repeatedly sprayed onto the formed catalyst layer according to the above method, it is possible to obtain a catalyst layer with a desired thickness.

After the ink spraying process is completed, a drying process may be further executed to dry the catalyst layer. In this case, to promote the drying process of sprayed inkdrops, ink may be sprayed in a thermally treated state during the ink spraying process.

The thermal treatment conditions may be suitably selected in consideration of production circumstances and productivity. For example, thermal treatment may be executed at 20 to 90°C, preferably 25 to 30°C, but not limitedly.

In the present invention, persons having ordinary skill in the art would sufficiently expect without any experiments that an amount of moisture in an electrode may be suitably controlled by adjusting a moisture concentration of a catalyst layer since the catalyst layer have different hydrophilicities depending on locations of channels, as mentioned above.

The electrode for a fuel cell according to the present invention has a high hydrophilicity at a necessary portion, so it may be more useful for a fuel cell operated in a low humidity condition. For example, the electrode may suitably keep moisture required for operating a fuel cell in a low humidity condition with humidity of 0 to 70%, preferably 20 to 70%, more preferably 30 to 60% and thus maintain the performance of the fuel cell in an excellent state.

The electrode for a fuel cell according to the present invention may be formed on an electrolyte membrane or a gas diffusion layer, so it may be used for manufacturing a membrane electrode assembly for a fuel cell according to the present invention.

As shown in FIG. 2, a membrane electrode assembly for a fuel cell according to the present invention includes an electrolyte membrane 201; and an anode and a cathode located at opposite sides of the electrolyte membrane 201. The anode and cathode may include a gas diffusion layer 208 and catalyst layers 203 and 205, respectively. The gas diffusion layer 208 for a fuel cell according to the present invention may include substrates 209a and 209b and microporous layers 207a and 207b formed on one side of the substrates 209a and 209b, respectively.

The electrolyte membrane employed in the present invention may adopt any electrolyte membrane used in the art, for example any one polymer selected from the group consisting of perfluorosulfonic acid polymer, hydrocarbon-based polymer, polyimide, polyvinylidene fluoride, polyethersulfone, polyphenylene sulfide, polyphenylene oxide, polyphosphazene, polyethylene naphthalate, polyester, doped polybenzimidazol, polyether ketone, polysulfone, or their acids and bases, but the present invention is not limited thereto.

The gas diffusion layer employed in the present invention plays a role of conductor between the separator and the catalyst layer, and it becomes a passage of gas that is reactant and water that is a product. Thus, the gas diffusion layer has a porous structure (with a porosity of 20 to 90%) such that gas may easily pass through it.

The gas diffusion layer may adopt any gas diffusion layer used in the art, and typically may include a conductive substrate made of any one selected from the group consisting of carbon paper, carbon cloth and carbon felt. The gas diffusion layer may further include a microporous layer formed on one side of the conductive substrate, and the microporous layer may be made of a carbon-based material or a fluorine-based resin.

The carbon-based material may be any one selected from the group consisting of graphite, carbon black, acetylene black, denka black, ketjen black, activated carbon, mesoporous carbon, carbon nanotube, carbon nano fiber, carbon nano horn, carbon nano ring, carbon nano wire, fullerene (C60) and Super-P, or their mixtures, but the present invention is not limited thereto.

The fluorine-based resin may be any one selected from the group consisting of polytetrafluoroethylene, polyvinylidene fluoride (PVdF), polyvinyl alcohol, cellulose acetate, polyvinylidene fluoride-hexafluoropropylene copolymer (PVdF-HFP) and styrene-butadiene rubber (SBR), or their mixtures, but the present invention is not limited thereto.

The gas diffusion layer may have a suitable thickness as necessary, for example 100 to 400µm, but not limitedly. If the gas diffusion layer has too small thickness, an electric contact resistance between the catalyst layer and the separator is increased, and the gas diffusion layer may not have so sufficient force to ensure compression. If the thickness is too great, the reactant, gas, may not easily move. Thus, the thickness of the gas diffusion layer should be maintained in a suitable level.

At this time, the catalyst layer is formed on the microporous layer of the gas diffusion layer.

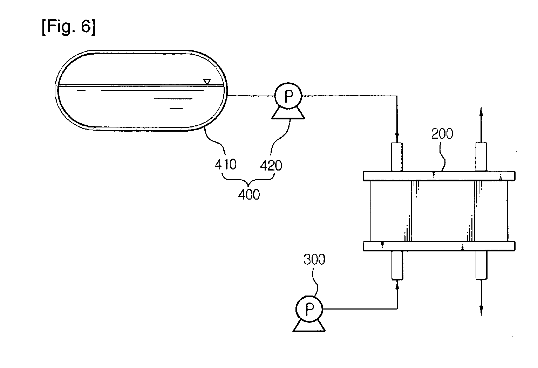

The present invention also provides a fuel cell including the membrane electrode assembly explained above. FIG. 6 is a schematic view illustrating a fuel cell according to an embodiment of the present invention. Referring to FIG. 6, the fuel cell of the present invention includes a stack 200, a fuel providing unit 400 and an oxidant providing unit 300.

The stack 200 includes at least one membrane electrode assembly of the present invention, and in the case that at least two membrane electrode assemblies are included, the stack 200 includes a separator interposed between the membrane electrode assemblies. The separator prevents the membrane electrode assemblies from being electrically connected to each other, and transfers a fuel and an oxidant provided from the external to the membrane electrode assemblies.

The fuel providing unit 400 provides a fuel to the stack 200, and may include a fuel tank 410 for storing a fuel and a pump 420 for providing the fuel stored in the fuel tank 410 to the stack 200. The fuel may be gaseous or liquid hydrogen or hydrocarbon fuel, and the hydrocarbon fuel may be, for example, methanol, ethanol, propanol, butanol or natural gas.

The oxidant providing unit 300 provides an oxidant to the stack 200. The oxidant is typically oxygen, and the oxidant providing unit 300 may be a pump for pumping oxygen or air.

### Industrial Applicability

The electrode for a fuel cell according to the present invention may control hydrophilicity of the catalyst layer differently according to locations, so it is possible to keep an amount of moisture in an electrode in a suitable way and to prevent shortage of moisture near a channel, thereby improving the performance of the cell.

In particular, the electrode for a fuel cell according to the present invention is more suitable for a fuel cell operated in a low humidity condition.

## Claims

1. An electrode for a fuel cell, which includes a gas diffusion layer contacting with a separator having a channel and a catalyst layer interposed between the gas diffusion layer and an electrolyte membrane,
wherein the catalyst layer of the electrode has two portions with different hydrophilicities, and a portion of the catalyst layer that faces a channel has a higher hydrophilicity than a portion that does not face a channel,
wherein the portion of the catalyst layer, which faces a channel, includes a metal catalyst or a metal catalyst on a carbon-based support; a polymer ionomer; and a hydrophilicity enhancer selected from the group consisting of zeolite, ceria, acid-treated ceramic particle and Al₂O₃, or their mixtures and
wherein a weight ratio of the metal catalyst to the hydrophilicity enhancer is 1:0.05 to 1.

2. The electrode for a fuel cell according to claim 1,
wherein the portions with different hydrophilicities have contact angles to water, which are different as much as 2° to 20°.

3. The electrode for a fuel cell according to claim 1,
wherein the fuel cell using the electrode is operated in a low humidity condition with a humidity of 0 to 70%.

4. The electrode for a fuel cell according to claim 1,
wherein the portion of the catalyst layer, which does not face a channel, includes a metal catalyst or a metal catalyst on a carbon-based support, and a polymer ionomer.

5. A method of preparing an electrode for a fuel cell, comprising:
(S1) preparing (a) a first catalyst layer forming ink including a metal catalyst or a metal catalyst on a carbon-based support, a polymer ionomer and a solvent, and (b) a second catalyst layer forming ink including a metal catalyst or a metal catalyst on a carbon-based support, a polymer ionomer, a hydrophilicity enhancer and a solvent, respectively; and
(S2) spraying the first and second catalyst layer forming inks to an electrolyte membrane or a gas diffusion layer by means of ink jet spraying such that the first catalyst layer forming ink is sprayed to a portion that does not face a channel and the second catalyst layer forming ink is sprayed to a portion that faces a channel, thereby forming a catalyst layer,
wherein, in the second catalyst layer forming ink, hydrophilicity enhancer is selected from the group consisting of zeolite, ceria, acid-treated ceramic particle and Al₂O₃, or their mixtures and
wherein a weight ratio of the metal catalyst to the hydrophilicity enhancer is 1:0.05 to 1.

6. The method of preparing an electrode for a fuel cell according to claim 5,
wherein, after the electrode for a fuel cell is made, a difference of contact angles to water between the portion facing a channel and the portion not facing a channel is 2° to 20°.

7. The method of preparing a cathode for a fuel cell according to claim 5,
wherein the fuel cell using the electrode is operated in a low humidity condition with a humidity of 0 to 70%.

8. A membrane electrode assembly for a fuel cell, which includes an electrolyte membrane, and an anode and a cathode respectively formed at opposite sides of the electrolyte membrane, each of the anode and the cathode having a catalyst layer and a gas diffusion layer,
wherein the anode and the cathode are the electrode for a fuel cell, defined in any one of claims 1 to 4.

9. A fuel cell, comprising:
a stack having one or more membrane electrode assemblies defined in claim 8 and a separator interposed between the membrane electrode assemblies;
a fuel providing unit for providing a fuel to the stack; and
an oxidant providing unit for providing an oxidant to the stack.

## Patentansprüche

1. Elektrode für eine Brennstoffzelle, welche eine Gasdiffusionsschicht, die mit einem Separator mit einem Kanal in Kontakt steht, und eine Katalysatorschicht, die zwischen der Gasdiffusionsschicht und einer Elektrolytenmembran angeordnet ist, einschließt,
wobei die Katalysatorschicht der Elektrode zwei Abschnitte mit verschiedenen Hydrophilien aufweist und ein Abschnitt der Katalysatorschicht, der einem Kanal zugewandt ist, eine höhere Hydrophilie aufweist als ein Abschnitt, der nicht einem Kanal zugewandt ist,
wobei der Abschnitt der Katalysatorschicht, der einem Kanal zugewandt ist, einen Metallkatalysator oder einen Metallkatalysator auf einem Träger auf Kohlenstoffbasis; ein Polymer-Ionomer; und einen Hydrophilieverstärker, ausgewählt aus der Gruppe bestehend aus Zeolith, Cerdioxid, Säure-behandelten Keramikpartikel und Al₂O₃ oder deren Mischungen, einschließt und
wobei ein Gewichtsverhältnis des Metallkatalysators zu dem Hydrophilieverstärker 1:0,5 bis 1 beträgt.

2. Elektrode für eine Brennstoffzelle nach Anspruch 1, wobei die Abschnitte mit verschiedenen Hydrophilien Kontaktwinkel gegenüber Wasser aufweisen, welche verschieden sind, so wie um 2° bis 20°.

3. Elektrode für eine Brennstoffzelle nach Anspruch 1, wobei die Brennstoffzelle, die die Elektrode einsetzt, in einer Bedingung mit niedriger Luftfeuchte mit einer Luftfeuchtigkeit von 0 bis 70% betrieben ist.

4. Elektrode für eine Brennstoffzelle nach Anspruch 1, wobei der Abschnitt der Katalysatorschicht, der nicht einem Kanal zugewandt ist, einen Metallkatalysator oder einen Metallkatalysator auf einem Träger auf Kohlenstoffbasis und ein Polymer-Ionomer einschließt.

5. Verfahren zum Herstellen einer Elektrode für eine Brennstoffzelle, umfassend:
(S1) Herstellen (a) einer eine erste Katalysatorschicht bildenden Tinte, die einen Metallkatalysator oder einen Metallkatalysator auf einem Träger auf Kohlenstoffbasis, ein Polymer-Ionomer und ein Lösungsmittel einschließt, und (b) einer eine zweite Katalysatorschicht bildenden Tinte, die einen Metallkatalysator oder einen Metallkatalysator auf einem Träger auf Kohlenstoffbasis, ein Polymer-Ionomer, einen Hydrophilieverstärker und ein Lösungsmittel einschließt; und
(S2) Aufsprühen der eine erste und eine zweite Katalysatorschicht bildenden Tinten auf eine Elektrolytenmembran oder eine Gasdiffusionsschicht mittels Tintenstrahlsprühen, so dass die eine erste Katalysatorschicht bildende Tinte auf einen Abschnitt aufgesprüht wird, der nicht einem Kanal zugewandt ist, und die eine zweite Katalysatorschicht bildende Tinte auf einen Abschnitt aufgesprüht wird, der einem Kanal zugewandt ist, wodurch eine Katalysatorschicht gebildet wird,
wobei, in der eine zweite Katalysatorschicht bildende Tinte, ein Hydrophilieverstärker ausgewählt ist aus der Gruppe bestehend aus Zeolith, Cerdioxid, Säure-behandeltem Keramikpartikel und Al₂O₃ oder deren Mischungen und
wobei ein Gewichtsverhältnis des Metallkatalysators zu dem Hydrophilieverstärker 1:0,05 bis 1 beträgt.

6. Verfahren zum Herstellen einer Elektrode für eine Brennstoffzelle nach Anspruch 5, wobei, nachdem die Elektrode für eine Brennstoffzelle hergestellt ist, ein Unterschied von Kontaktwinkeln gegenüber Wasser zwischen dem Abschnitt, der einem Kanal zugewandt ist, und dem Abschnitt, der nicht einem Kanal zugewandt ist, 2° bis 20° beträgt.

7. Verfahren zum Herstellen einer Kathode für eine Brennstoffzelle nach Anspruch 5,
wobei die Brennstoffzelle, die die Elektrode einsetzt, in einer Bedingung mit niedriger Luftfeuchte mit einer Luftfeuchtigkeit von 0 bis 70% betrieben wird.

8. Membranelektrodenanordnung für eine Brennstoffzelle, die eine Elektrolytenmembran und eine Anode und eine Kathode einschließt, die jeweils auf gegenüberliegenden Seiten der Elektrolytenmembran gebildet sind, wobei jede der Anode und der Kathode eine Katalysatorschicht und eine Gasdiffusionsschicht aufweist, wobei die Anode und die Kathode die Elektrode für eine Brennstoffzelle sind, die in einem der Ansprüche 1 bis 4 definiert ist.

9. Brennstoffzelle, umfassend:
einen Stapel mit einer oder mehreren Membranelektrodenanordnungen, die in Anspruch 8 definiert sind, und einem Separator, der zwischen den Membranelektrodenanordnungen angeordnet ist;
eine Brennstoffzuführeinheit zur Zuführung eines Brennstoffes zu dem Stapel; und
eine Oxidationsmittelzuführeinheit zur Zuführung eines Oxidationsmittels zu dem Stapel.

## Revendications

1. Electrode pour pile à combustible, qui comprend une couche de diffusion de gaz en contact avec un séparateur ayant un canal et une couche de catalyseur interposés entre la couche de diffusion de gaz et une membrane à électrolyte,
**caractérisée en ce que** la couche de catalyseur de l'électrode comporte deux parties ayant des hydrophilicités différentes, et **en ce qu'**une partie de la couche de catalyseur qui est tournée vers un canal est d'une hydrophilicité plus élevée que la partie qui n'est pas tournée vers un canal,
**caractérisée en ce que** la partie de la couche de catalyseur qui est tournée vers un canal comprend un catalyseur en métal ou bien un catalyseur en métal sur un support à base de carbone; un ionomère en polymère; et un enrichisseur d'hydrophilicité sélectionné dans le groupe constitué de zéolite, de ceria, de particules de céramique traitées à l'acide et de Al₂O₃ ou bien de mélanges de ces produits et
**caractérisée en ce que** le rapport en poids entre le catalyseur en métal et l'enrichisseur d'hydrophilicité est compris entre 1:0,05 et 1.

2. Electrode pour pile à combustible selon la revendication 1
**caractérisée en ce que** les parties ayant des hydrophilicités différentes ont des angles de contact avec l'eau qui se différencent jusqu'à raison de 2° à 20°.

3. Electrode pour pile à combustible selon la revendication 1
**caractérisée en ce que** la pile à combustible qui se sert de l'électrode est utilisée en présence d'une faible humidité, qui est comprise entre 0 et 70%.

4. Electrode pour pile à combustible selon la revendication 1
**caractérisée en ce que** la partie de la couche de catalyseur qui n'est pas tournée vers un canal comprend un catalyseur en métal ou bien un catalyseur en métal sur un support à base de carbone, ainsi qu'un ionomère en polymère.

5. Procédé de préparation d'une électrode pour pile à combustible comportant les étapes qui consistent:
(S1) à préparer (a) une première encre servant à former le catalyseur, y compris un catalyseur en métal ou bien un catalyseur en métal sur un support à base de carbone, un ionomère en polymère et un solvant, et (b) une deuxième encre servant à former le catalyseur, y compris un catalyseur en métal ou bien un catalyseur en métal sur un support à base de carbone, un ionomère en polymère, un enrichisseur d'hydrophilicité et un solvant, respectivement; et
(S2) à pulvériser la première et la deuxième encres servant à former le catalyseur sur une membrane à électrolyte ou une couche de diffusion de gaz par pulvérisation au jet d'encre, de telle manière que la première encre servant à former le catalyseur est pulvérisée sur une partie qui n'est pas tournée vers un canal, et la deuxième encre servant à former le catalyseur est pulvérisée sur une partie qui est tournée vers un canal, formant ainsi une couche de catalyseur,
**caractérisée en ce que**, pour la deuxième encre servant à former le catalyseur, l'enrichisseur d'hydrophilicité est sélectionné dans le groupe constitué de zénolite, de ceria, de particules de céramique traitées à l'acide et de Al₂O₃ ou bien de mélanges de ces produits et
**caractérisée en ce que** le rapport en poids entre le catalyseur en métal et l'enrichisseur d'hydrophilicité est compris entre 1:0,05 et 1.

6. Procédé de préparation d'une électrode pour pile à combustible selon la revendication 5,
**caractérisé en ce que**, après la réalisation de l'électrode pour la pile à combustible, la différence entre les angles de contact avec l'eau de la partie qui est tournée vers un canal et la partie qui n'est pas tournée vers un canal, est comprise entre 2° et 20°.

7. Procédé de préparation d'une électrode pour la pile à combustible selon la revendication 5,
**caractérisé en ce que** la pile à combustible qui se sert de l'électrode est utilisée en présence d'une faible humidité, qui est comprise entre 0 et 70%.

8. Ensemble d'électrodes à membrane pour pile à combustible, qui comprend une membrane à électrolyte, ainsi qu'une anode et une cathode respectivement formées sur des côtés opposés de la membrane à électrolyte, l'anode et la cathode comportant chacune une couche de catalyseur et une couche de diffusion de gaz,
**caractérisé en ce que** l'anode et la cathode sont les électrodes de la pile à combustible définie dans l'une quelconque des revendications 1 à 4.

9. Pile à combustible comportant:
un empilage qui comprend un ou plusieurs ensembles d'électrodes à membrane définis dans la revendication 8 et un séparateur interposé entre les ensembles d'électrodes à membrane;
une unité d'alimentation de combustible qui fournit du combustible à l'empilage; et
une unité d'alimentation d'oxydant qui fournit de l'oxydant à l'empilage.
